# EUROPEAN PATENT SPECIFICATION

(11) **EP 3 728 008 B1**
(45) Date of publication and mention of the grant of the patent: **22.09.2021**
(21) Application number: 18829995.2
(22) Date of filing: 10.12.2018
(51) Int. Cl.: B62K 5/10

(54) **TILTING MOTOR VEHICLE WITH THREE OR FOUR WHEELS AND METHOD FOR SAFELY BLOCKING THE TILTING MOVEMENTS OF A TILTING MOTOR VEHICLE WITH THREE OR FOUR WHEELS**
KIPPMOTORFAHRZEUG MIT DREI ODER VIER RÄDERN UND VERFAHREN ZUR SICHEREN BLOCKIERUNG DER KIPPBEWEGUNGEN EINES KIPPMOTORFAHRZEUGES MIT DREI ODER VIER RÄDERN
VÉHICULE À MOTEUR INCLINABLE À TROIS OU QUATRE ROUES ET PROCÉDÉ POUR BLOQUER EN TOUTE SÉCURITÉ LES MOUVEMENTS D'INCLINAISON D'UN VÉHICULE À MOTEUR INCLINABLE À TROIS OU QUATRE ROUES

(30) Priority: 21.12.2017 IT 201700148125
(43) Date of publication of application: 28.10.2020
(73) Proprietor: Piaggio & C. S.P.A., 56025 Pontedera Pisa (IT)
(72) Inventor: RAFFAELLI, Andrea, 56025 Pontedera, Pisa (IT)
(74) Representative: Zanettin, Gianluigi
(86) International application number: PCT/IB2018/059819
(87) International publication number: WO 2019/123092

(56) References cited:
- EP-A1- 3 153 392
- WO-A1-2016/001722
- WO-A1-2017/115293

## Description

### FIELD OF APPLICATION

The present invention relates to a motor vehicle with three or four wheels and to a method for safely blocking the tilting movements of a tilting motor vehicle with three or four wheels.

In particular, the motor vehicle according to the invention may be a motor vehicle provided with two tilting steering wheels at the front and with a fixed axle drive wheel at the rear.

### BACKGROUND ART

In the field of motor vehicles, there is an increasingly growing supply of "hybrid" vehicles, which combine the features of motor vehicles, in terms of ease of handling, with the stability of four-wheeled vehicles.

Such models are, for example, three-wheel motor vehicles equipped with two steering front wheels, and four-wheel motor vehicles known as quads.

More in detail, the three-wheel motor vehicles mentioned above may be provided with two tilting (or inclining) and steering wheels at the front and with a fixed axle drive wheel at the rear. The rear wheel has the purpose of providing torque and therefore allowing traction, while the paired front wheels have the purpose of providing directionality to the vehicle. The paired wheels on the forecarriage may tilt and incline, in addition to steer. By virtue of this solution, with respect to motor vehicles having three wheels, of which two at the rear, motor vehicles with two wheels on the forecarriage are equivalent to real motorcycles because the motor vehicle can tilt on curves, precisely as a motorcycle. However, with respect to a motor vehicle with only two wheels, such vehicles with two paired wheels on the forecarriage have a greater stability guaranteed by the double support on the ground of the front wheels, similarly to that provided by a car.

The front wheels are kinematically connected to each other by means of kinematic mechanisms which allow them to tilt and/or steer in a synchronous and mirroring manner, e.g. by means of the interposition of articulated quadrilaterals. Such motor vehicles are also equipped with two independent suspensions, one for each of the two front wheels, equipped with shock absorbers, which are also independent.

So, tilting motor vehicles with three wheels are intended to guarantee to the user the handling of a two-wheel motor vehicle and, at the same time, the stability and safety of a four-wheel motor vehicle.

A three-wheel tilting motor vehicle of this type is described, for example, in Italian patent application IT2003MIA001108 in the name of the same Applicant.

Due to their structural peculiarity, motor vehicles of this type may fall as a result of an uncontrolled and/or accidental tilting movement in particular travel conditions, e.g. at very low speeds or when standing or stopping.

Such a drawback has been tackled by equipping the aforesaid vehicles with tilt blocking systems, which may be actuated either manually by the user and/or by an automatic control system.

Generally, the automatic control system follows an actuating logic of the tilt blocking system which includes activating the blocking system only when the tilt angle and the travel speed of the motor vehicle are below predetermined threshold values. Thereby, the operation of the tilt blocking system is only permitted at slow speeds (i.e. motor vehicle nearly stopped) and with negligible tilting angles (i.e. motor vehicle with the centerline plane substantially vertical), whereby excluding potentially dangerous conditions for the stability of the motor vehicle. Such an automatic system may also provide for the driver to be able to deactivate the tilt blocking system by opening the throttle.

An anti-tilting system for such motor vehicles is described, for example, in Italian patent application EP1561612A1 in the name of the same Applicant.

In general, the static stability of a three-wheel tilting motor vehicle is linked to the track of the motor vehicle itself, meant as the distance between the two front wheels. Static stability means stability in active tilt blocking conditions. The wider the track, the higher the stability of the motor vehicle. This also applies to accidental or uncontrolled tilting movements which are potentially less dangerous as the track increases.

Operatively, the tilting block is functional to increasing the safety of the motor vehicle, whereby preventing the vehicle from falling as a result an uncontrolled and/or accidental tilting movement in particular conditions of travel at very slow speed or in the case of stopping.

However, blocking the tilt is an intervention which reduces the degrees of freedom of the motor vehicle, limiting the possibility of intervention by the driver, and which can therefore influence the maneuverability of the motor vehicle with safety-related risks. Generally, for these reasons, as mentioned above, blocking the tilt is allowed only at very slow speeds or with the vehicle stopped.

On narrow-track motor vehicles, blocking the tilt may not be suitable even at very low speeds or with the vehicle stopped if it is actuated with motor vehicle not perfectly stabilized horizontally. Therefore, in such situations, blocking the tilt may trigger unbalances of the motor vehicle which cannot be effectively contrasted by the driver and which can cause the motor vehicle to fall.

On wide-track motor vehicles, such a problem is not felt because the motor vehicle has an inherently stable equilibrium. Therefore, when activated, the tilting block does not produce any negative effects on the driver's safety.

The description provided in construction terms can be interpreted as follows.

A three-wheel motor vehicle defines a so-called "supporting triangle" with the pair of front wheels and the rear wheel. In other words, a triangular-shaped supporting surface is delimited, generated as geometric connection by three peripheral lines which join the pair of front wheels and the rear wheel to one another.

Therefore, the greater the forecarriage track, i.e. the distance between the pair of front wheels (the wheelbase being the same), the greater the area delimited by the supporting surface. The median plane which divides the supporting surface defines a generatrix.

In a three-wheeled vehicle, the supporting surface provides an estimate of the equilibrium of the motor vehicle. In particular, when the motor vehicle with activated tilt block tilts rigidly, it maintains its own equilibrium condition until the vertical to the ground of the center of gravity of the vehicle and driver system falls within the supporting surface. When the deviation with respect to the generatrix falls outside of the supporting surface, the motor vehicle loses the equilibrium condition.

For such a reason, by reducing the track, the possible deviation with respect to the generatrix is either very low or substantially zero.

Therefore, applying a tilting block in a motor vehicle with narrow track, in some cases, instead of helping the driver to maintain equilibrium may contribute instead to hindering him or her, causing a rigid inclination and therefore poor safety. Currently, as mentioned above, the deactivation of the tilt blocking system by the driver requires the opening of the throttle, and so an acceleration of the motor vehicle. In case of initial loss of equilibrium of the motor vehicle, performing such a deactivation maneuver (opening the throttle) may not be instinctive for the driver. Therefore, this can then result in a delay in the deactivation of the blocking system and therefore a worsening of the loss of equilibrium situation. It should also be noted that such a maneuver determines an albeit slight acceleration of the motor vehicle, which in some cases may not help the driver to recover the equilibrium conditions of the motor vehicle.

Document WO2017/115293A1 shows the preamble of claim 1.

In light of the above, the need is therefore felt for narrow-track tilting motor vehicles, as identified above, to implement a tilting block which similarly to the traditional tilt blocking systems reduces the risk of instability situations when stopped or at low speeds of the motor vehicle caused by uncontrolled and/or accidental tilting movements and which, at the same time, can be immediately deactivated if initial loss of equilibrium situations of the motor vehicle occur so as to allow full freedom of action to the driver without necessarily requiring the opening of the throttle. The need is also felt for the tilting block to the implemented in a constructionally simple manner.

### PRESENTATION OF THE INVENTION

The need is therefore felt to solve the drawbacks and limitations mentioned above with reference to the prior art.

Such a need is met by a tilting motor vehicle with three or four wheels according to claim 1 and by a method for safely blocking the tilting movements of a tilting motor vehicle with three or four wheels according to claim 16.

### DESCRIPTION OF THE DRAWINGS

Further features and advantages of the present invention will become more apparent from the following description of preferred embodiments given by way of non-limiting examples, in which:

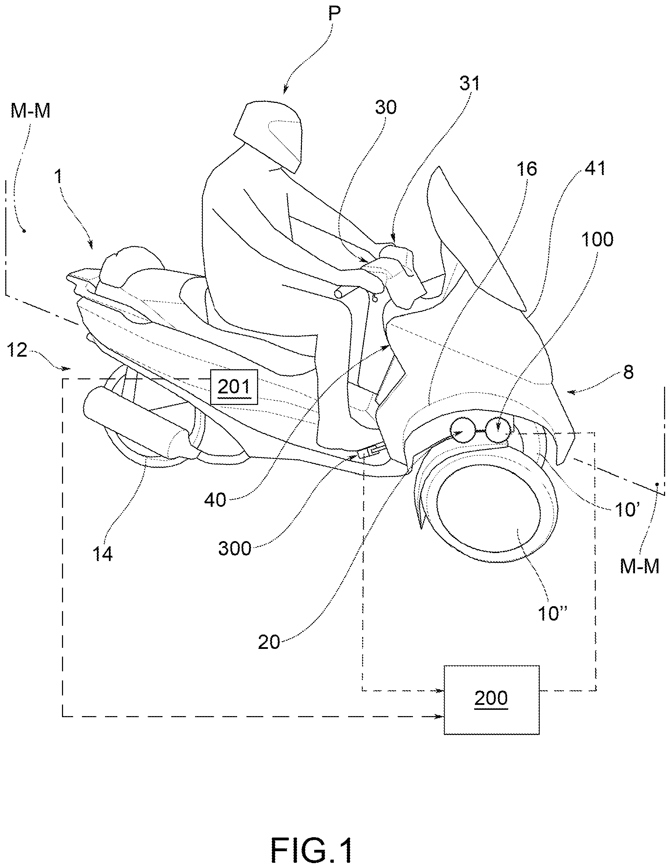

- figure 1 is a diagrammatic perspective view of a tilting motor vehicle with three of four wheels according to an embodiment of the present invention; and
- figure 2 is a diagrammatic view of a dashboard of the tilting motor vehicle with three or four wheels according to an embodiment of the present invention. Elements or parts in common to the embodiments described below will be indicated using the same reference numerals.

### DETAILED DESCRIPTION

With reference to the aforementioned figures, reference numeral 1 globally indicates a tilting motor vehicle with three or four wheels, according to the present invention.

For the purposes of the present invention, it is worth noting that the words "motor vehicle" must be considered in broad sense, comprising any motorcycle having at least three wheels, i.e. two front wheels, as described in greater detail below, and at least one rear wheel. Therefore, so-called quadricycles, having two wheels on the forecarriage and two wheels at the rear, are also included within the definition of motor vehicle.

According to a general embodiment, the tilting vehicle 1 with three or four wheels has at least two front wheels 10', 10".

The motor vehicle 1 comprises:
- a tilt blocking system 100 of the motor vehicle 1;
- an electronic control unit 200 suitable to control the intervention of the tilt blocking system 100, conditioning it upon the occurrence of one or more travel conditions of the motor vehicle established by a predefined intervention logic;
- a command device 300, which is connected to the electronic control unit 200 and can be activated by a driver P to request the intervention of the tilt blocking system 100.

According to a preferred embodiment, the motor vehicle 1 comprises a frame 6 which extends from a forecarriage 8 to a rear 12. The forecarriage 8 supports at least two front wheels 10, the rear 12 supports one or more rear wheels 14.

It is possible to distinguish a left front wheel 10' and a right front wheel 10", wherein the definition of left and right wheel 10',10" is merely conventional and is meant with respect to a vehicle driver. In other words, said wheels are positioned to the left and to the right of a center plane M-M of the motor vehicle, with respect to the observation point of a driver of the vehicle itself.

For the purposes of the present invention, the frame 6 of the motor vehicle may be of any shape or size and may be, for example, of the trellis, box, cradle, single or double type, and so forth. The frame 6 of the motor vehicle may be in a single piece or in several parts; for example, the frame 6 of the motor vehicle interconnects with a rear frame 13, which may comprise a rear swingarm (not shown) supporting one or more rear drive wheels 14. The aforesaid rear swingarm may be connected to the frame 6 by direct hinging, or by the interposition of the leverages and/or intermediate frames.

In particular, the forecarriage 8 of the motor vehicle 1 may comprise a forecarriage frame 16 and a pair of front wheels 10',10", kinematically connected to each other and to the frame of the forecarriage 16 by means of a tilting mechanism 20 which preferably allows them to tilt.

In the accompanying figures, the tilting kinematic mechanism is diagrammatically shown by a circle 20.

The aforesaid tilting kinematic mechanism 20 may have any configuration, preferably provided it is functional to allow the front wheels to tilt in a synchronous and substantially mirroring manner. Preferably, the tilting kinematic mechanism 20 is an articulated quadrilateral system.

The tilt blocking system of the motor vehicle (diagrammatically shown in figures by a circle 100) can assume any configuration functional to block the tilting of the motor vehicle. In particular, the tilt blocking system 100 of the motor vehicle is configured to act either directly or indirectly on said tilting kinematic mechanism.

An example of tilt blocking system configured to act directly on the tilting kinematic mechanism is described in European patent application EP1561612A1 in the name of the same Applicant.

Some examples of tilt blocking system configured to act indirectly on the tilting kinematic mechanism, and in particular on the axle journals of the front wheels, are described in international applications WO2017/115297A1, WO2017/115294A1 and WO2017/115296A1 in the name of the same Applicant.

Preferably, the driving conditions of the motor vehicle when the electronic control unit 200 determines the intervention of the tilt blocking system 100 as a function of a predetermined intervention logic may be defined in terms of tilt angle and/or travel speed and/or throttle opening and/or the presence the driver aboard.

According to a particularly preferred embodiment, the intervention logic followed by the electronic control unit 200 provides for the intervention of the tilt blocking system 100 to be permitted when the tilting angle of the motor vehicle is not greater than a predetermined threshold value (in particular, not greater than 12°, preferably not greater than 10° in relation to the track, weight and height of the center of gravity) and also the traveling speed to be not greater than a predetermined threshold value (in particular, not greater than 3-5 km/h). Therefore, the intervention of the tilt blocking system 100 is only permitted at slow speed (i.e. motor vehicle nearly stopped) and with negligible tilting angles (i.e. motor vehicle with the centerline plane substantially vertical), whereby excluding potentially dangerous conditions for the stability of the motor vehicle.

According to a particular embodiment, the intervention logic followed by the electronic control unit 200 may also provide for, in addition to the occurrence of predetermined tilt angle and travel speed conditions, the intervention of the tilt blocking system 100 to be permitted only when the presence of the driver aboard also detected and/or when the closing of the throttle of the vehicle is also detected. In the first case (driver present aboard), it is aimed at avoiding the accidental intervention of the tilt blocking system with the vehicle stopped while the driver is performing parking maneuvers and is no longer aboard. In the second case (throttle closed), it is aimed at excluding the intervention of the tilt blocking system when the motor vehicle is accelerating and at the same time (as already provided in the prior art) at providing the availability of an emergency maneuver for deactivating the blocking system (throttle opening) to the driver.

Preferably, for this purpose, the electronic control unit 200 is connected to at least an appropriate sensor adapted to detect the tilt angle (e.g. an inclinometer, in particular of the capacitive type; in a particular embodiment, the inclinometer can be used in combination with a mono- or multi-axis accelerometer) and to a speed detector, as well as optionally to a sensor for determining the presence on the driver aboard (e.g. a load cell associated with the seat) and/or a sensor for detecting the opening state of the throttle. Such one or more sensors are diagrammatically shown in the figures by a square 201.

According to the invention, the aforesaid command device 300 is a control having at least two positions, i.e. a deactivation position and an activation position, and is configured to maintain the position as long as an external force is applied to the command device 300.

Furthermore, according to the invention, the aforesaid electronic control unit 200 is configured to activate the tilt blocking system 100 so as to block the tilt of the motor vehicle 1 only when the aforesaid command device 300 is in the activation position. So, the activation of the tilt blocking system 100 is conditioned to continue the application of an external force on the command device 300. Operatively, such an external force is applicable by the driver P. Therefore, the driver P can continuously control the activation and deactivation of the tilt blocking system 100, assisted by the electronic control unit 200.

The following is therefore obtained by virtue of the invention.

The activation of the tilt blocking system 100, and so the blocking of the tilting movement of the motor vehicle, takes place only at the occurrence of one or more driving conditions of the motor vehicle established by a predefined intervention logic and in the concurrent presence of a continued activation assent by the driver P. The consent to activate the blocking system 100 is therefore subject not only to an automatic check of predefined safety conditions by means of the electronic control unit, but also by the evaluation of the driver P.

The deactivation of the tilt blocking system 100, and so the unblocking of the tilting of the motor vehicle, takes place either when one or more driving conditions of the motor vehicle established by a predefined intervention logic come less or in absence of a continued activation assent by the driver P. The deactivation of the blocking system 100 can thus be operated independently both by the electronic control unit in an automatic manner and by the driver P.

In other words, according to the invention, the activation and the deactivation of the tilt blocking system 100 is managed by a control with two independent inputs: one input is automatically managed by the electronic control unit 200 as a function of a predetermined control logic and the other input is managed by the driver P by means of the command device 300.

Unlike the provision of the prior art, which includes using the throttle as a command for deactivating the tilt blocking system, by virtue of the invention a command dedicated to activating and also deactivating the blocking system 100 is provided to the driver P. Therefore, it is possible to implement a tilting block which similarly to the traditional tilt blocking systems reduces the risk of situations of instability in stopped conditions or at low speeds of the motor vehicle caused by uncontrolled and/or accidental tilting movements, but which at the same time can be immediately deactivated if initial loss of equilibrium situations of the motor vehicle occur so as to let full freedom of action to the driver without however necessarily requiring the opening of the throttle. This allows to increase safety when using a tilt blocking system even in narrow-track motor vehicles.

Preferably, the aforesaid command device 300 is arranged in an ergonomic position for the driver P of the motor vehicle 1 when driving. Such an ergonomic position is such that the driver P instinctively releases the command device 300 when an initial loss of equilibrium of the motor vehicle itself occurs, so that the command device 300 moves back to the deactivation position and the tilt blocking system 100 of the motor vehicle is deactivated by said electronic control unit 200. Some examples are provided below in the following description.

"Ergonomic position" means a position which is intuitively and easily reachable by the hands and/or feet of the driver P.

Advantageously, in this way, the deactivation of the tilt blocking system 100 due to the release of the command device 300 by the driver P may thus occur instinctively and, therefore, basically in quicker and almost involuntarily when a situation of initial loss of equilibrium of the motor vehicle occurs. This further increases safety when using a tilt blocking system also in a tilting motor vehicle with three or four wheels. Either alternatively or in combination with the positioning of the command device in an instinctively releasable ergonomic position, the aforesaid command device 300 may be configured so as to be operable by the driver with an uncomfortable postural manner as to naturally be abandoned by the driver P him or herself when a situation of initial loss of equilibrium of the motor vehicle occurs. Thereby, when a situation of initial loss of equilibrium of the motor vehicle occurs, by virtue of this configuration and of the consequent natural reaction of the driver P, the command device 300 is released and returns to the deactivation position and the tilt blocking system 100 of the motor vehicle is deactivated by the electronic control unit 200. Some examples are provided below in the following description.

Also in this case, the deactivation of the tilt blocking system 100 due to the release of the command device 300 by the driver P may occur instinctively and, therefore, basically quicker, as involuntary reaction to the occurrence of a situation of initial loss of equilibrium of the motor vehicle. This further increases safety in the use of a tilt blocking system also in a tilting motor vehicle with three or four wheels. According to an embodiment of the present invention (not shown in the accompanying figures), the aforesaid command device 300 may consist of a footboard which can be operated by the driver P only using both feet. In this case, the command device 300 is arranged in an ergonomic position for the driver P because it can be intuitively and easily reachable by the feet of the driver P. Furthermore, such a command device 300 in the form of a footboard is instinctively releasable by the driver P when a situation of initial loss of equilibrium of the motor vehicle arises. Indeed, in such a situation, the drivers generally tend to put their feet on the ground to prevent falling.

As an alternative to the footboard, the aforesaid command device 300 may consist of two separate pedals so as to be operable by the driver P using both feet.

As an alternative to the footboard or to the double pedal, the aforesaid command device 300 may consist of a single pedal which can be operated by the driver P using only one foot. The operating effect is similar to that which can be obtained with a footboard or a double pedal. When a situation of initial loss of equilibrium of the motor vehicle occurs, drivers tend to put their feet in the ground to avoid falling, instinctively releasing the pedal which constitutes the command device 300. According to an alternative embodiment of the present invention, the aforesaid command device 300 may consist of at least one button. Preferably, the aforementioned at least one button is positioned so as to be operable by the driver P using his or her hands. However, the case may be included in which such at least one button can be operated by the driver P using his or her feet.

In particular, the aforesaid at least one button can be arranged on a dashboard 30 of the motor vehicle 1.

Alternatively, the aforesaid at least one button can be arranged on a counter-shield 40 of the motor vehicle 1. "Counter-shield" means the part of the forecarriage of the motor vehicle which, with respect to the longitudinal axis of the motor vehicle, is opposite to the front part of the motor vehicle 41 (called "shield") and is directed toward the housing area of the driver P.

Alternatively, the aforesaid at least one button can be arranged on a handlebar 31 of the motor vehicle 1.

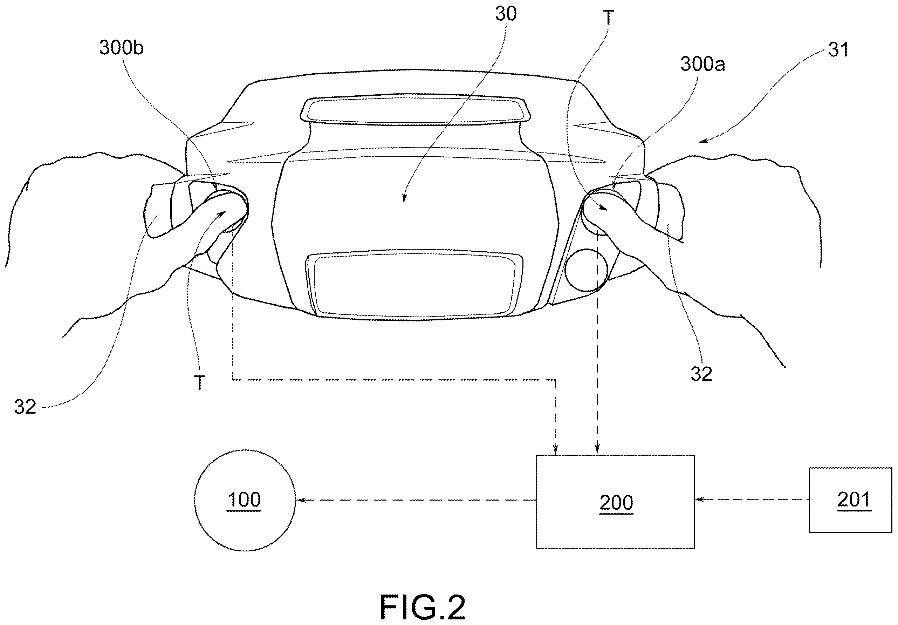

In particular, the aforesaid command device 300 may consist of two buttons 300a and 300b, arranged on opposite sides with respect to one another on the handlebar 31 of the motor vehicle 1. Preferably, as shown in Figure 2, each of said two buttons 300a and 300b is arranged near one of the handles 32 of the handlebar 31, so that the command device 300 can be actuated by the driver P only using both hands. In this case, the command device 300 is arranged in an ergonomic position for the driver P, because it is intuitively and easily reachable by the hands of the driver P and at the same time the command device 300 is configured so as to be operable by the driver with an uncomfortable postural mode as to naturally be abandoned by the driver P him or herself. Indeed, in order to operate the command device 300, the driver P is basically forced to use both thumbs T in an uncomfortable or at least unnatural postural manner, such as to be naturally abandoned by the driver P when a situation of initial loss of equilibrium of the motor vehicle occurs. Indeed, in such a situation, the instinctive and natural reaction of a driver P is to close his or her hands on the handles of the handlebar and possibly place them on the brake levers. In this maneuver, the thumbs tend to be placed on the handle to guarantee gripping, whereby releasing the two buttons 300a and 300b.

According to an embodiment of the present invention (not shown in the accompanying figures), the aforesaid command device 300 may consist of at least one lever, which can be preferably actuated by the driver P by hand.

In particular, the aforesaid at least one lever can be positioned near a brake lever on the handlebar 31 of the motor vehicle 1, in particular in a downwards angled position with respect to such a lever. Preferably, such an angled position is of at least 60°, and even more preferably at least 90°, with respect to the brake lever, in order to compel the driver P to assume an uncomfortable postural or at least unnatural position to grip it.

Also in this case, the command device 300 is arranged in an ergonomic position for the driver P, because it is intuitively and easily reachable by the hands of the driver P and at the same time the command device 300 is configured so as to be operable by the driver with an uncomfortable postural manner as to naturally be abandoned by the driver P him or herself. Indeed, in order to operate the command device 300, due to the positioning of the lever, the driver P is compelled to place his or her hands uncomfortably, or at least unnaturally, i.e. so that the driver P himself or herself is naturally driven to abandon when a situation of initial loss of equilibrium of the motor vehicle occurs. Indeed, in such a situation, the instinctive and natural reaction of a driver P is to close his or her hands on the handles of the handlebar and possibly place them on the brake levers. In this maneuver, the hands tend to be placed back on the handle to guarantee gripping, whereby releasing the lever.

It is possible to provide for the aforesaid command device 300 to consist of two levers, instead of one lever, each of each is positioned near one of the two brake levers of the handlebar of said motor vehicle, in downward angled position with respect to the lever, as mentioned above. The same considerations apply for the case of a single lever.

Advantageously, the command device 300, which is connected to the electronic control unit 200 and which can be actuated by the driver P to request the intervention of the tilt blocking system, may consist of an electric switch connected to the electronic control unit 200, or alternatively may directly constitute the actuator for actuating the tilt blocking system 100.

In the latter case, the action of the actuator for activating the blocking system is conditioned by the intervention of the electronic control unit 200. However, it has the advantage that when the command device 300 is released by the driver P (i.e. deactivated) the supply of the power required to operate the tilt blocking system 100 is automatically interrupted. This simplifies managing the deactivation of the blocking system 100 whereby disengaging it from electrical commands.

The method for safely blocking the tilting movements of a tilting motor vehicle with three or four wheels will now be described.

Such a method is applied to a motor vehicle with three or four wheels equipped with a tilt blocking system 100, an electronic control unit 200 suitable to control the intervention of said tilt blocking system 100 conditioning it upon the occurrence of one or more travel conditions of the motor vehicle established by a predefined intervention logic, and a command device 300, which is connected to the aforesaid electronic control unit 200 and which can be activated by a driver P to request the intervention of the tilt blocking system 100.

In particular, the method is applicable to a tilting motor vehicle with three or four wheels 1 according to the invention, and in particular as described above.

More in detail, the method comprises the following operative steps:
a) keeping a command device 300 in an activation position by applying an external force to the command 300;
b) actuating the tilt blocking system 100 by means of the electronic control unit 200 when the command device 300 is in the activation position so as to block the tilting of the motor vehicle 1.

Advantageously, the aforesaid external force is applied by the driver P of the motor vehicle 1 by continuously actuating the command device 300.

The method may further comprise the step of releasing the command device 300 to deactivate the tilt blocking system 100 when the driver P senses a situation of initial loss of equilibrium of the motor vehicle 1.

As already mentioned when describing the tilting motor vehicle with three or four wheels 1 according to the invention, the activation of the tilt blocking system 100 is then conditioned to the continued application of an external force on the command device 300. Operatively, such an external force is applicable by the driver P. Therefore, the driver P can continuously control the activation and deactivation of the tilt blocking system 100, assisted by the electronic control unit 200.

The same considerations already made in relation to the motor vehicle 1, which for the sake of brevity will not be here retold again, apply here.

Preferably, the aforesaid command device 300 is arranged in an ergonomic position for the driver P of the motor vehicle 1 when driving. Such a position is such that the driver P instinctively releases said command device 300 when he/she senses a situation of initial loss of equilibrium of the motor vehicle itself, so as the step of releasing the command device is executed upon the occurrence of such an initial equilibrium loss condition.

Either alternatively or in combination with the positioning of the command device in an instinctively releasable ergonomic position, the aforesaid command device 300 may be configured so that it can be operated by the driver with an uncomfortable postural manner such as to be naturally abandoned by the driver him or herself P when the driver P senses a situation of initial loss of equilibrium of the motor vehicle, so that the step of releasing the command device is performed when such an initial equilibrium loss condition occurs.

Also in this case, the same considerations made in relation to the motor vehicle 1, which for the sake of brevity will not be here retold again, apply here.

As can be appreciated from the description above, the present invention allows to overcome the drawbacks presented in the prior art.

In order to satisfy contingent specific needs, those skilled in art can make several changes and variations to the tilting motor vehicle with three or four wheels and to the method for safely blocking the tilting movements of a tilting motor vehicle with three or four wheels described above, all falling within the scope of the invention defined by the following claims.

## Claims

1. Tilting motor vehicle with three or four wheels, of which at least two front wheels (10', 10"), comprising:
- a tilt blocking system (100) of the motor vehicle (1);
- an electronic control unit (200) suitable to control the intervention of said tilt blocking system (100), conditioning it upon the occurrence of one or more travel conditions of the motor vehicle established by a predefined intervention logic;
- a command device (300), which is connected to said electronic control unit (200) and can be activated by a driver (P) to request the intervention of the tilt blocking system (100),
wherein said command device (300) is a command with at least two positions, one position of deactivation and one position of activation, **characterized in that** it is configured to keep the activation position as long as an external force is applied to the command device (300), and wherein said electronic control unit (200) is configured to activate said tilt blocking system (100) so to block the tilting of the motor vehicle (1) only when also said command device (300) is in the activation position.

2. Motor vehicle according to claim 1, wherein said command device (300) is arranged in an ergonomic position for the driver (P) of said motor vehicle (1) while driving, said position being such that the driver (P) instinctively releases said command device (300) when an initial loss of equilibrium of the motor vehicle itself occurs, so that said command device (300) moves back to the deactivation position and the tilt blocking system (100) of the motor vehicle is deactivated by said electronic control unit (200).

3. Motor vehicle according to claim 1 or 2, wherein said command device (300) is configured in such a way as to be operable by the driver with an uncomfortable postural modality such as to be naturally abandoned by the driver himself (P) when a situation of initial loss of equilibrium of the motor vehicle occurs, so that said command device (300) moves back to the deactivation position and the tilt blocking system (100) of the motor vehicle is deactivated by said electronic control unit (200).

4. Motor vehicle according to claim 1, 2 or 3, in which said command device (300) consists of a footboard which can be operated by the driver (P) only using both feet.

5. Motor vehicle according to claim 1, 2 or 3, wherein said command device (300) consists of one or two pedals so as to be operable by the driver (P) using respectively one or both feet.

6. Motor vehicle according to claim 1, 2 or 3, wherein said command device (300) consists of at least one button (300a; 300b), wherein preferably said at least one button is arranged on a dashboard of said motor vehicle, or on a counter-shield (40) of said motor vehicle or on a handlebar (31) of said motor vehicle.

7. Motor vehicle according to claim 1, 2 or 3, in which said command device (300) is constituted by two buttons (300a; 300b), arranged on a handlebar (31) of said motor-vehicle, preferably each button being arranged near one of the handles (32) of said handlebar (31), in such a way that said command device (300) can be actuated by the driver (P) only by using both hands.

8. Motor vehicle according to claim 1, 2 or 3, wherein said command device (300) consists of at least one lever, wherein in particular said at least one lever is positioned near a brake lever of the handlebar (31) of said motor vehicle, preferably in angled position downwards with respect to said lever, preferably said angled position being at least 60°, and more preferably at least 90°, with respect to said brake lever.

9. Motor vehicle according to claim 1, 2 or 3, wherein said command device (300) consists of two levers, each of which is positioned near one of the two brake levers of the handlebar (31) of said motor vehicle, preferably in an angled position downwards with respect to said lever, preferably said angled position being at least 60°, and more preferably at least 90°, with respect to said brake lever.

10. Motor vehicle according to one or more of the previous claims, wherein said one or more travel conditions of the motor vehicle established by said predefined intervention logic are defined in terms of tilt angle and / or travel speed and /or accelerator opening and / or presence on board of the driver.

11. Motor vehicle according to one or more of the previous claims, comprising a frame (6) extending from a forecarriage (8), which supports the pair of front wheels (10', 10"), to a rear (12), which supports one or more rear wheels (14), in which said forecarriage (8) in turn comprises:
- a forecarriage frame (16),
- said pair of front wheels (10', 10") kinematically connected to each other and to the forecarriage frame (16) by means of a tilting kinematic mechanism (20) which guarantees them to tilt and / or steer synchronously,
wherein said tilt blocking system (100) of the motor vehicle is configured to act directly or indirectly on said tilting kinematic mechanism.

12. Method for safely blocking the tilting movements of a three or four wheeled motor vehicle equipped with a blocking system (100), an electronic control unit (200) suitable to control the intervention of said tilt blocking system (100) conditioning it upon the occurrence of one or more travel conditions of the motor vehicle established by a predefined intervention logic, and a command device (300) connected to said electronic control unit (200) and activable by a driver (P) to request the intervention of the tilt blocking system (100), comprising the following operating steps:
a) keeping a command device (300) in an activation position applying an external force to the command (300)
b) actuating said tilt blocking system (100) by means of said electronic control unit (200) when said command device (300) is in the activation position so as to block the tilting of the motor vehicle (1).

13. Method according to claim 12, wherein said external force is exerted by the driver (P) of said motor vehicle actuating continuously the command device (300) of said motor vehicle, wherein preferably the method further comprises the step of releasing the command device (300) to deactivate the tilt blocking system (100) when the driver (P) senses a situation of initial loss of equilibrium of the motor vehicle (1).

14. Method according to claim 13 wherein said command device (300) is arranged in an ergonomic position for the driver (P) of said motor vehicle (1) while driving, said position being such that the driver (P) instinctively releases said command device (300) when he/she senses a situation of initial loss of equilibrium of the motor vehicle itself, so as the step of releasing the command device is executed upon the occurrence of such an initial equilibrium loss condition.

15. Method according to claim 13 or 14, wherein said command device (300) is configured in such a way as to be operable by the driver with an uncomfortable postural modality such as to be naturally abandoned by the driver himself (P) when the driver (P) senses a situation of initial loss of equilibrium of the motor vehicle, so as the step of releasing the command device is executed upon the occurrence of such an initial equilibrium loss condition.

## Patentansprüche

1. Ein kippbares Kraftfahrzeug mit drei oder vier Rädern, von denen mindestens zwei Vorderräder (10', 10") sind, das Folgendes umfasst:
- ein Kipp-Blockiersystem (100) des Kraftfahrzeugs (1);
- eine elektronische Steuereinheit (200), die geeignet ist, den Eingriff des Kipp-Blockiersystems (100) zu steuern, indem sie ihn vom Auftreten einer oder mehrerer Fahrbedingungen des Kraftfahrzeugs abhängig macht, die durch eine vordefinierte Eingriffslogik festgelegt sind;
- eine Befehlsvorrichtung (300), die mit der elektronischen Steuereinheit (200) verbunden ist und von einem Fahrer (P) aktiviert werden kann, um das Eingreifen des Kipp-Blockiersystems (100) anzufordern,
wobei die genannte Befehlsvorrichtung (300) eine Befehlsschaltfläche *(command)* mit mindestens zwei Positionen ist, einer Position der Deaktivierung und einer Position der Aktivierung, **dadurch gekennzeichnet, dass** sie konfiguriert ist, um die Aktivierungsposition beizubehalten, solange eine externe Kraft auf die Befehlsvorrichtung (300) ausgeübt wird, und wobei die genannte elektronische Steuereinheit (200) so konfiguriert ist, dass sie das genannte Kipp-Blockiersystem (100) nur dann aktiviert, um das Kippen des Kraftfahrzeugs (1) zu blockieren, wenn sich auch die genannte Befehlsvorrichtung (300) in der Aktivierungsposition befindet.

2. Das Kraftfahrzeug nach Anspruch 1, wobei die genannte Befehlsvorrichtung (300) an einer ergonomischen Position für den Fahrer (P) des genannten Kraftfahrzeugs (1) während der Fahrt angeordnet ist, wobei die genannte Position derart ist, dass der Fahrer (P) die genannte Befehlsvorrichtung (300) instinktiv loslässt, wenn ein anfänglicher Verlust des Gleichgewichts des Kraftfahrzeugs selbst auftritt, sodass sich die genannte Befehlsvorrichtung (300) zurück in die Deaktivierungsposition bewegt und das Kipp-Blockiersystem (100) des Kraftfahrzeugs durch die genannte elektronische Steuereinheit (200) deaktiviert wird.

3. Das Kraftfahrzeug nach Anspruch 1 oder 2, wobei die genannte Befehlsvorrichtung (300) auf eine Weise konfiguriert ist, dass sie vom Fahrer mit einer derartigen unbequemen posturalen Modalität bedienbar ist, dass diese beim Auftreten einer Situation des anfänglichen Gleichgewichtsverlustes des Kraftfahrzeugs vom Fahrer selbst (P) natürlich verlassen wird, sodass sich die genannte Befehlsvorrichtung (300) in die Deaktivierungsposition zurückbewegt und das Kipp-Blockiersystem (100) des Kraftfahrzeugs durch die genannte elektronische Steuereinheit (200) deaktiviert wird.

4. Das Kraftfahrzeug nach Anspruch 1, 2 oder 3, bei dem die genannte Befehlsvorrichtung (300) aus einem Trittbrett besteht, das vom Fahrer (P) nur mit beiden Füßen bedient werden kann.

5. Das Kraftfahrzeug nach Anspruch 1, 2 oder 3, wobei die genannte Befehlsvorrichtung (300) aus einem oder zwei Pedalen besteht, sodass sie vom Fahrer (P) unter Verwendung jeweils von einem oder beiden Füßen betätigt werden kann.

6. Das Kraftfahrzeug nach Anspruch 1, 2 oder 3, wobei die genannte Befehlsvorrichtung (300) aus mindestens einer Taste (300a; 300b) besteht, wobei vorzugsweise die genannte mindestens eine Taste an einem Armaturenbrett des genannten Kraftfahrzeugs oder an einem Gegenschild bzw. *Counter-Shield* (40) des genannten Kraftfahrzeugs oder an einem Lenker (31) des genannten Kraftfahrzeugs angeordnet ist.

7. Das Kraftfahrzeug nach Anspruch 1, 2 oder 3, bei dem die genannte Befehlsvorrichtung (300) durch zwei Tasten (300a; 300b) gebildet ist, die an einem Lenker (31) des genannten Kraftfahrzeugs angeordnet sind, wobei vorzugsweise jede Taste in der Nähe eines der Griffe (32) des genannten Lenkers (31) angeordnet ist, sodass die genannte Befehlsvorrichtung (300) vom Fahrer (P) nur unter Verwendung beider Hände betätigt werden kann.

8. Das Kraftfahrzeug nach Anspruch 1, 2 oder 3, wobei die genannte Befehlsvorrichtung (300) aus mindestens einem Hebel besteht, wobei insbesondere der genannte mindestens eine Hebel in der Nähe eines Bremshebels des Lenkers (31) des genannten Kraftfahrzeugs angeordnet ist, vorzugsweise in einer nach unten abgewinkelten Position in Bezug auf den genannten Hebel, wobei vorzugsweise die genannte abgewinkelte Position mindestens 60°, und noch bevorzugter mindestens 90°, in Bezug auf den genannten Bremshebel beträgt.

9. Das Kraftfahrzeug nach Anspruch 1, 2 oder 3, wobei die genannte Befehlsvorrichtung (300) aus zwei Hebeln besteht, von denen jeder in der Nähe eines der beiden Bremshebel des Lenkers (31) des genannten Kraftfahrzeugs positioniert ist, vorzugsweise in einer nach unten abgewinkelten Position in Bezug auf den genannten Hebel, wobei die genannte abgewinkelte Position vorzugsweise mindestens 60° und mehr bevorzugt mindestens 90° in Bezug auf den genannten Bremshebel beträgt.

10. Das Kraftfahrzeug nach einem oder mehreren der vorstehenden Ansprüche, wobei der genannte eine oder die genannten mehreren Fahrbedingungen des Kraftfahrzeugs, die durch die genannte vordefinierte Eingriffslogik festgelegt werden, in Form von Kippwinkeln und/oder von Fahrgeschwindigkeit und/oder von Gaspedalöffnung und/oder der Anwesenheit des Fahrers an Bord definiert sind.

11. Das Kraftfahrzeug nach einem oder mehreren der vorstehenden Ansprüche, umfassend einen Rahmen (6), der sich von einem Vordergestell (8) aus, der das Paar Vorderräder (10', 10") trägt, bis zu einem Heck (12) erstreckt, das ein oder mehrere Hinterräder (14) trägt, wobei das genannte Vordergestell (8) wiederum Folgendes umfasst:
- einen Vordergestell-Rahmen (16),
- das genannte Paar von Vorderrädern (10', 10"), die kinematisch miteinander und mit dem Vordergestell-Rahmen (16) mittels eines kippbaren kinematischen Mechanismus (20) verbunden sind, der gewährleistet, dass sie kippen und/oder synchron lenken,
wobei das genannte Kipp-Blockiersystem (100) des Kraftfahrzeugs so konfiguriert ist, dass es direkt oder indirekt auf den genannten kippenden kinematischen Mechanismus einwirkt.

12. Ein Verfahren zum sicheren Blockieren der Kippbewegungen eines drei- oder vierrädrigen Kraftfahrzeugs, das mit Folgendem ausgestattet ist: mit einem Blockiersystem (100), mit einer elektronischen Steuereinheit (200), die geeignet ist, den Eingriff des genannten Kipp-Blockiersystems (100) zu steuern, indem sie diesen vom Auftreten einer oder mehrerer Fahrbedingungen des Kraftfahrzeugs abhängig macht, die durch eine vordefinierte Eingriffslogik festgelegt sind, und mit einer Befehlsvorrichtung (300), die mit der genannten elektronischen Steuereinheit (200) verbunden ist und von einem Fahrer (P) aktiviert werden kann, um den Eingriff des Kipp-Blockiersystems (100) anzufordern, umfassend die folgenden Arbeitsschritte:
a) Halten einer Befehlsvorrichtung (300) in einer Aktivierungsposition, indem eine externe Kraft auf die Befehlsschaltfläche (300) ausgeübt wird
b) Betätigen des genannten Kipp-Blockiersystems (100) mittels der genannten elektronischen Steuereinheit (200), wenn die genannte Befehlsvorrichtung (300) in der Aktivierungsposition ist, um das Kippen des Kraftfahrzeugs (1) zu blockieren.

13. Das Verfahren nach Anspruch 12, wobei die genannte externe Kraft durch den Fahrer (P) des genannten Kraftfahrzeugs ausgeübt wird, der die Befehlsvorrichtung (300) des genannten Kraftfahrzeugs kontinuierlich betätigt, wobei das Verfahren vorzugsweise ferner folgenden Schritt umfasst: Freigeben der Befehlsvorrichtung (300), um das Kipp-Blockiersystem (100) zu deaktivieren, wenn der Fahrer (P) eine Situation des anfänglichen Gleichgewichtsverlusts des Kraftfahrzeugs (1) wahrnimmt.

14. Das Verfahren nach Anspruch 13, wobei die genannte Befehlsvorrichtung (300) in einer ergonomischen Position für den Fahrer (P) des genannten Kraftfahrzeugs (1) während der Fahrt angeordnet ist, wobei die genannte Position derart ist, dass der Fahrer (P) die genannte Befehlsvorrichtung (300) instinktiv freigibt, wenn er/sie eine Situation eines anfänglichen Gleichgewichtsverlusts des Kraftfahrzeugs selbst wahrnimmt, sodass der Schritt des Freigebens der Befehlsvorrichtung beim Auftreten einer solchen Bedingung des anfänglichen Gleichgewichtsverlustes ausgeführt wird.

15. Das Verfahren nach Anspruch 13 oder 14, wobei die genannte Befehlsvorrichtung (300) auf eine Weise konfiguriert ist, dass sie vom Fahrer mit einer derartigen unbequemen posturalen Modalität bedienbar ist, dass diese beim Auftreten einer Situation des anfänglichen Gleichgewichtsverlustes des Kraftfahrzeugs vom Fahrer selbst (P) natürlich verlassen wird, wenn der Fahrer (P) eine Situation eines anfänglichen Gleichgewichtsverlusts des Kraftfahrzeugs wahrnimmt, sodass der Schritt des Freigebens der Befehlsvorrichtung beim Auftreten einer solchen Bedingung des anfänglichen Gleichgewichtsverlustes ausgeführt wird.

## Revendications

1. Véhicule à moteur inclinable à trois ou quatre roues, dont au moins deux roues avant (10', 10"), comprenant :
- un système de blocage d'inclinaison (100) du véhicule à moteur (1) ;
- une unité de régulation électronique (200) adaptée pour réguler l'intervention dudit système de blocage d'inclinaison (100), en la conditionnant à l'apparition d'une ou plusieurs conditions de déplacement du véhicule à moteur établies par une logique d'intervention prédéfinie ;
- un dispositif de commande (300), qui est relié à ladite unité de régulation électronique (200) et peut être activé par un conducteur (P) pour demander l'intervention du système de blocage d'inclinaison (100),
dans lequel ledit dispositif de commande (300) est une commande ayant au moins deux positions, une position de désactivation et une position d'activation, **caractérisé en ce qu'**il est configuré pour maintenir la position d'activation pour autant qu'une force externe est appliquée au dispositif de commande (300), et dans lequel ladite unité de régulation électronique (200) est configurée pour activer ledit système de blocage d'inclinaison (100) de manière à bloquer l'inclinaison du véhicule à moteur (1) uniquement lorsque ledit dispositif de commande (300) est également dans la position d'activation.

2. Véhicule à moteur selon la revendication 1, dans lequel ledit dispositif de commande (300) est agencé dans une position ergonomique pour le conducteur (P) dudit véhicule à moteur (1) pendant la conduite, ladite position étant telle que le conducteur (P) relâche instinctivement ledit dispositif de commande (300) lorsqu'une perte d'équilibre initiale du véhicule à moteur lui-même se produit, de sorte que ledit dispositif de commande (300) revient à la position de désactivation et le système de blocage d'inclinaison (100) du véhicule à moteur est désactivé par ladite unité de régulation électronique (200).

3. Véhicule à moteur selon la revendication 1 ou 2, dans lequel ledit dispositif de commande (300) est configuré de telle manière à pouvoir être actionné par le conducteur ayant une modalité posturale inconfortable de manière à être naturellement abandonnée par le conducteur lui-même (P) lorsqu'une situation de perte d'équilibre initiale du véhicule à moteur se produit, de sorte que ledit dispositif de commande (300) revient à la position de désactivation et le système de blocage d'inclinaison (100) du véhicule à moteur est désactivé par ladite unité de régulation électronique (200).

4. Véhicule à moteur selon la revendication 1, 2 ou 3, dans lequel ledit dispositif de commande (300) est constitué d'un repose-pied qui peut être actionné par le conducteur (P) uniquement en utilisant les deux pieds.

5. Véhicule à moteur selon la revendication 1, 2 ou 3, dans lequel ledit dispositif de commande (300) est constitué d'une ou deux pédales de manière à pouvoir être actionné par le conducteur (P) en utilisant respectivement un ou les deux pieds.

6. Véhicule à moteur selon la revendication 1, 2 ou 3, dans lequel ledit dispositif de commande (300) est constitué d'au moins un bouton (300a ; 300b), dans lequel de préférence ledit au moins un bouton est agencé sur un tableau de bord dudit véhicule à moteur, ou sur un contre-bouclier (40) dudit véhicule à moteur ou sur un guidon (31) dudit véhicule à moteur.

7. Véhicule à moteur selon la revendication 1, 2 ou 3, dans lequel ledit dispositif de commande (300) est constitué de deux boutons (300a ; 300b), agencés sur un guidon (31) dudit véhicule à moteur, de préférence chaque bouton étant agencé à proximité de l'une des poignées (32) dudit guidon (31), de telle sorte que ledit dispositif de commande (300) peut être actionné par le conducteur (P) uniquement en utilisant les deux mains.

8. Véhicule à moteur selon la revendication 1, 2 ou 3, dans lequel ledit dispositif de commande (300) est constitué d'au moins un levier, dans lequel en particulier ledit au moins un levier est positionné à proximité d'un levier de frein du guidon (31) dudit véhicule à moteur, de préférence dans une position inclinée vers le bas par rapport audit levier, de préférence ladite position inclinée étant d'au moins 60°, et de manière davantage préférée d'au moins 90°, par rapport audit levier de frein.

9. Véhicule à moteur selon la revendication 1, 2 ou 3, dans lequel ledit dispositif de commande (300) est constitué de deux leviers, chacun étant positionné à proximité de l'un des deux leviers de frein du guidon (31) dudit véhicule à moteur, de préférence dans une position inclinée vers le bas par rapport audit levier, de préférence ladite position inclinée étant d'au moins 60°, et de manière davantage préférée d'au moins 90°, par rapport audit levier de frein.

10. Véhicule à moteur selon une ou plusieurs des revendications précédentes, dans lequel lesdites une ou plusieurs conditions de déplacement du véhicule à moteur établies par ladite logique d'intervention prédéfinie sont définies en termes d'angle d'inclinaison et/ou de vitesse de déplacement et/ou d'ouverture d'accélérateur et/ou de présence à son bord du conducteur.

11. Véhicule à moteur selon une ou plusieurs des revendications précédentes, comprenant un châssis (6) s'étendant depuis un train avant (8), qui supporte la paire de roues avant (10', 10"), vers un arrière (12), qui supporte une ou plusieurs roues arrière (14), dans lequel ledit train avant (8) comprend à son tour :
- un châssis de train avant (16),
- ladite paire de roues avant (10', 10") reliées cinématiquement l'une à l'autre et au châssis de train avant (16) au moyen d'un mécanisme cinématique inclinable (20) qui leur garantit de s'incliner et/ou s'orienter de manière synchrone,
dans lequel ledit système de blocage d'inclinaison (100) du véhicule à moteur est configuré pour agir directement ou indirectement sur ledit mécanisme cinématique inclinable.

12. Procédé pour bloquer en toute sécurité les mouvements d'inclinaison d'un véhicule à moteur à trois ou quatre roues équipé d'un système de blocage (100), d'une unité de régulation électronique (200) adaptée pour réguler l'intervention dudit système de blocage d'inclinaison (100) en la conditionnant à l'apparition d'une ou plusieurs conditions de déplacement du véhicule à moteur établies par une logique d'intervention prédéfinie, et un dispositif de commande (300) relié à ladite unité de régulation électronique (200) et activable par un conducteur (P) pour demander l'intervention du système de blocage d'inclinaison (100), comprenant les étapes opérationnelles suivantes consistant à :
a) maintenir un dispositif de commande (300) dans une position d'activation en appliquant une force externe à la commande (300)
b) actionner ledit système de blocage d'inclinaison (100) au moyen de ladite unité de régulation électronique (200) lorsque ledit dispositif de commande (300) est dans la position d'activation de manière à bloquer l'inclinaison du véhicule à moteur (1).

13. Procédé selon la revendication 12, dans lequel ladite force externe est exercée par le conducteur (P) dudit véhicule à moteur en actionnant en continu le dispositif de commande (300) dudit véhicule à moteur, dans lequel de préférence le procédé comprend en outre l'étape consistant à relâcher le dispositif de commande (300) pour désactiver le système de blocage d'inclinaison (100) lorsque le conducteur (P) détecte une situation de perte d'équilibre initiale du véhicule à moteur (1).

14. Procédé selon la revendication 13 dans lequel ledit dispositif de commande (300) est agencé dans une position ergonomique pour le conducteur (P) dudit véhicule à moteur (1) pendant la conduite, ladite position étant telle que le conducteur (P) relâche instinctivement ledit dispositif de commande (300) lorsqu'il/elle détecte une situation de perte d'équilibre initiale du véhicule à moteur lui-même, de sorte que l'étape de relâchement du dispositif de commande est exécutée lors de l'apparition d'une telle condition de perte d'équilibre initiale.

15. Procédé selon la revendication 13 ou 14, dans lequel ledit dispositif de commande (300) est configuré de manière à pouvoir être actionné par le conducteur ayant une modalité posturale inconfortable de manière à être naturellement abandonnée par le conducteur lui-même (P) lorsque le conducteur (P) détecte une situation de perte d'équilibre initiale du véhicule à moteur, de sorte que l'étape de relâchement du dispositif de commande est exécutée lors de l'apparition d'une telle condition de perte d'équilibre initiale.
